# EUROPÄISCHE PATENTANMELDUNG

(11) **EP 1 266 713 A2**
(43) Veröffentlichungstag der Anmeldung: **18.12.2002**
(21) Anmeldenummer: 02012672.8
(22) Anmeldetag: 07.06.2002
(51) Int. Cl.: B23H 11/00, B23H 7/26, B23Q 16/08

(54) **Halter für ein zu bearbeitendes Werkstück**

(30) Priorität: 11.06.2001 DE 10128097
(71) Anmelder: System 3R International AB, 162 50 Vällingby (SE)
(72) Erfinder: Nordquist, Hakon, 187 75 Täby (SE); Modin, Christer, 164 78 Kista (SE)
(74) Vertreter: Zinngrebe, Horst, Dr.rer.nat.

(57) **Zusammenfassung**

Beschrieben wird ein Halter für ein Werkstück oder Werkzeug, in dessen Oberfläche mehrere Nuten mit im Wesentlichen ebenen Flanken eingebracht sind, deren an der Oberfläche ausgebildete, gegenüberliegende Kanten einen vorgegebenen Abstand aufweisen, wobei der Halter wenigstens im Bereich der elastisch deformierbaren Kanten aus einem gesinterten Werkstoff besteht.

## Beschreibung

Die Erfindung betrifft einen Halter für ein Werkstück oder ein Werkzeug, in dessen Oberfläche mehrere Nuten mit im wesentlichen ebenen Flanken eingebracht sind, deren an der Oberfläche ausgebildete, gegenüberliegende Kanten einen vorgegebenen Abstand aufweisen. Derartige Halter werden zum Anspannen beispielsweise eines zu bearbeitenden Werkstückes an ein Futter einer Bearbeitungsmaschine, etwa eine Funkenerosionsmaschine verwendet.

Aus der Europäischen Patentschrift 255 042 ist eine Spannvorrichtung für ein Werkzeug an einer Werkzeugmaschine bekannt, welche im wesentlichen aus einem an der Maschine befestigten Spannfutter und einem Halter für das Werkzeug besteht. Mittels einer Spanneinrichtung kann der Halter nach Belieben von dem Futter gelöst und wieder an das Futter angespannt werden. Damit der Halter stets in exakt der gleichen Position innerhalb einer zur Spannrichtung senkrechten Ebene, üblicherweise die x-y-Ebene bezeichnet, an das Futter angespannt wird, sind am Futter und am Halter beim Spannen zusammenwirkende Referenzelemente vorgesehen, zu denen am Futter axial vorstehende Prismenzapfen und am Halter Paare von einander gegenüberliegender Lippen gehören. Die Ausrichtung des Halters zum Futter wird durch Eingreifen von an den Prismenzapfen vorhandenen Prismenflächen zwischen die axial elastischen Lippen je eines Lippenpaares bewirkt. Die Herstellung eines derartigen Halters ist jedoch mit einem erheblichen Aufwand verbunden.

Eine andere Art der Ausrichtung von Halter zum Futter ist aus der Elektroden-Halterungseinrichtung gemäß DE-A-3003756 bekannt, bei der in prismatischen Nuten des Halters kegelstumpfförmige, aus dem Futter axial vorstehende Zapfen eintauchen. Da weder die Nuten noch die Zapfen zwischenliegende axialelastische Elemente aufweisen, führen die oft erheblichen axialen Spannkräfte beim Spannen leicht zu einer bleibenden Deformation entweder der Nutenflanken oder der Prismenflächen an den Zapfen, was die Wiederholgenauigkeit der Ausrichtung des Halters zum Futter beeinträchtigt.

In dem Dokument EP 1 068 919 A1 wird eine Einrichtung zum positionsdefinierten Aufspannen eines Werkstückes im Arbeitsbereich einer Bearbeitungsmaschine dargestellt, welche ein Spannfutter und einen Werkzeugträger aufweist. Wenn der mit abgestuften Vertiefungen versehene Werkzeugträger zum Vorbereiten des Spannens auf das mit Zentrierzapfen ausgerüstete Spannfutter so aufgelegt wird, daß ein Zwischenraum von nur einigen hundertstel Millimetern verbleibt, liegen die Zentrierzapfen an den inneren Stufen der Vertiefungen an. Während des anschließenden Spannens werden die Stufen durch die Zentrierzapfen elastisch verformt. Ein Hub des Werkzeugträgers zwischen Freigabe und Spannen durch das Spannfutter von nur einigen hundertstel Millimetern bei einer Spannkraft von üblicherweise einigen tausend Newton setzt einen erheblichen Aufwand in der Spanneinrichtung voraus.

Der in dem Dokument US-A-5,791,803 beschriebene Werkzeughalter ist zwar preiswert in der Herstellung; er weist jedoch keine Nuten auf, so daß er in einem Spannsystem nicht verwendet werden kann, das in der genannten Schrift EP-B-255042 erläutert ist.

Der Erfindung liegt die Aufgabe zugrunde, einen preiswert herstellbaren Werkstück- oder Werkzeughalter anzugeben, der vornehmlich in dem Spannsystem gemäß EP 255 042 verwendet werden kann.

Bei dem eingangs genannten Halter ist dazu erfindungsgemäß vorgesehen, dass der Halter wenigstens im Bereich der elastisch deformierbaren Kanten aus einem gesinterten Werkstoff besteht. Damit wird eine Elastizität der Kanten aus dem gesinterten Werkstoff gegenüber dem Spanndruck erreicht, die einerseits jede plastische Verformung der Kanten oder der Prismenflächen beim Spannen ausschließt und andererseits dennoch eine ausgezeichnete Wiederholgenauigkeit in der Positionierung des Halters relativ zum Futter gewährleistet. Ein derartiger Halter ist mit vergleichsweise geringen Kosten herstellbar, besitzt hohe Wiederholgenauigkeit in der Positionierung, hinreichende Festigkeit und lange Lebensdauer. Dabei kann das Spannfutter an dem Halter eine Klemmkraft von etwa 4000 bis etwa 8000 N entwickeln.

Besteht der Halter zur Gänze aus gesintertem Werkstoff, läßt sich die Erfindung zweckmäßig in der Weise realisieren, dass im Oberflächenbereich, insbesondere im Bereich der Nutenkanten des Halters eine erste Art Körner und für den Halterkern eine zweite, andere Art Körner für das Sintern verwendet werden. In einer Ausführungsform der Erfindung werden in die plane Oberfläche des Halters die eingangs erwähnten radialen Nuten geschnitten. Die relativ festen äußeren Nutenkanten können unter der üblichen Spannkraft aufgrund des weicheren unter ihnen befindlichen Sintermaterials axial elastisch nachgeben. Ein solcher Halter läßt sich daher im Rahmen einer Spannveinrichtung mit Erfolgt einsetzen, die aus der erwähnten Schrift EP-B-255 042 bekannt ist. Der erfindungsgemäße Halter ist nicht nur preiswerter in der Herstellung, sondern ermöglicht auch aufgrund seines geringeren Gewichts eine Reduzierung der Spannkraft relativ zu einem aus vollem Werkzeugstahl bestehenden Halter.

Die Erfindung gestattet weitere vorteilhafte Ausführungsformen. So kann der gesinterte Werkstoff geschlossene und unter dem Spanndruck deformierbare Poren aufweisen. Alternativ sind die Körner des gesinterten Werkstoffes unter Spanndruck elastisch deformierbar. Es kann sich ferner als zweckmäßig erweisen, einen gesinterten Werkstoff aus mehreren unterschiedlichen Kornarten zu verwenden, unter denen gegebenenfalls auch nichtmetallische Körner vorgesehen sein können. Ferner kann der gesinterte Werkstoff mit Vorteil aus mehreren Schichten aus jeweils unterschiedlichen Kornarten bestehen. Darüberhinaus erweist es sich als zweckmäßig, dem gesinterten Werkstoff eine nichtisotrope Elastizität und gegebenenfalls auch eine schwingungsdämpfende Eigenschaft zu verleihen.

Für die Gestaltungen des erfindungsgemäßen, ganz aus Sintermaterial bestehenden Halters erweist es sich für besondere Anwendungsfälle als zweckmäßig, wenn sich beiderseits jeder Nut eine zur jeweiligen Nut parallele Rinne erstreckt. Alternativ oder ergänzend kommt in Betracht, nahe jeder äußeren Nutkante eine oder mehrere zur Nutflanke parallele Blindbohrungen in das Sintermaterial einzubringen.

Im übrigen sind vorteilhafte Ausgestaltungen der Erfindung in den Unteransprüchen angegeben. Die Erfindung wird nachstehend anhand der beigefügten Zeichnungen für die dort veranschaulichten Ausführungsformen beschrieben. Es zeigen:

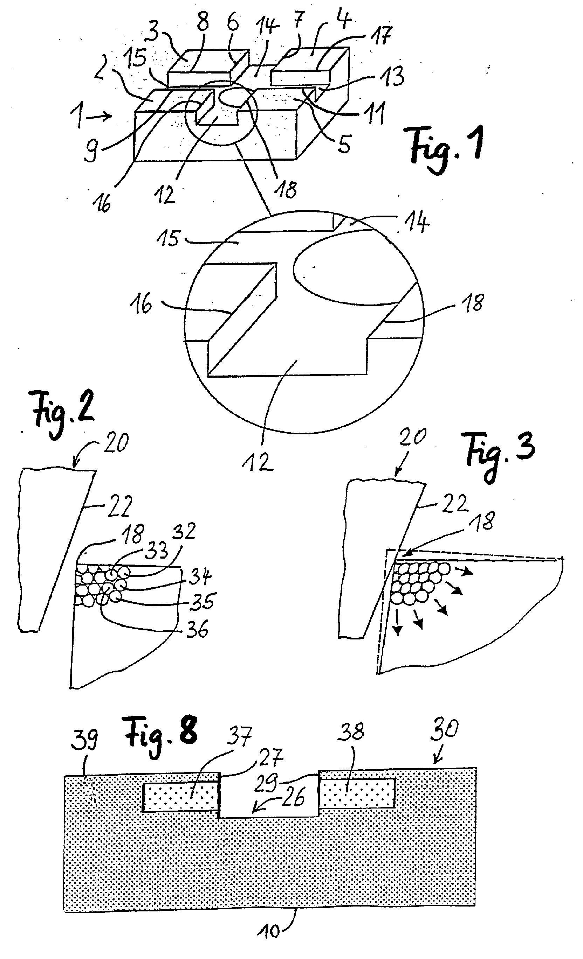

Fig. 1: eine schematische, perspektivische Ansicht eines Halters mit Ausschnittvergrößerung;
Fig. 2: eine schematische Darstellung zur Erläuterung des Ausrichtungsvorgangs;
Fig. 3: eine der Fig. 2 entsprechende Darstellung zur Erläuterung des Spannvorgangs;
Fig. 4: einen Vertikalschnitt durch einen Halter im Bereich einer Nut;
Fig. 5: eine Draufsicht auf den Halter gemäß Figur 4;
Fig. 6: einen Vertikalschnitt durch einen Halter im Bereich einer Nut gemäß einer anderen Ausführungsform;
Fig. 7: eine Draufsicht auf den Halter gemäß Fig. 6;
Fig. 8: einen Vertikalschnitt durch einen Halter im Bereich einer Nut nach einer weiteren Ausführungsform; und
Fig. 9: einen Vertikalschnitt durch einen Halter im Bereich einer Nut nach noch einer weiteren Ausführungsform.

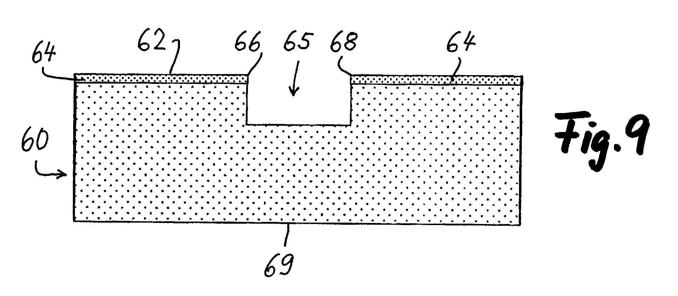

Der im Ganzen mit 1 bezeichnete Halter besteht im wesentlichen aus gesintertem Werkzeugstahl, ist in Draufsicht quadratisch und weist eine im wesentlichen plane Oberseite auf, die aus vier in einer Ebene liegende Abschnitte 2, 3, 4 und 5 gebildet ist. An der Unterseite 10 des Halters (Figur 8) kann ein zu bearbeitendes Werkstück oder ein Werkzeug, beispielsweise eine Elektrode für eine elektroerosive Bearbeitung dauerhaft befestigt sein. Die Abschnitte 2, 3, 4 und 5 sind durch in den Halter 1 von seiner Oberseite her eingebrachte Nuten 12, 13, 14 und 15 voneinander getrennt. Die Nuten haben rechtwinkeligen Querschnitt mit im wesentlichen ebenen Nutenflanken und sind kreuzweise so angelegt, dass jeweils zwei gegenüberliegende Nuten 12 und 14 bzw. 13 und 15 fluchten. Die Weite der Nuten ist für alle Nuten gleich, so daß die an jeweils einer Nut an der Oberseite des Halters gegenüberliegenden, parallelen Kanten 16, 18 für die Nut 12, die gegenüberliegenden parallelen Kanten 11, 17 für die Nut 13, die gegenüberliegenden parallelen Kanten 6, 7 für die Nut 14 und die gegenüberliegenden parallelen Kanten 8, 9 für die Nut 15 einen vorgegebenen Abstand voneinander haben.

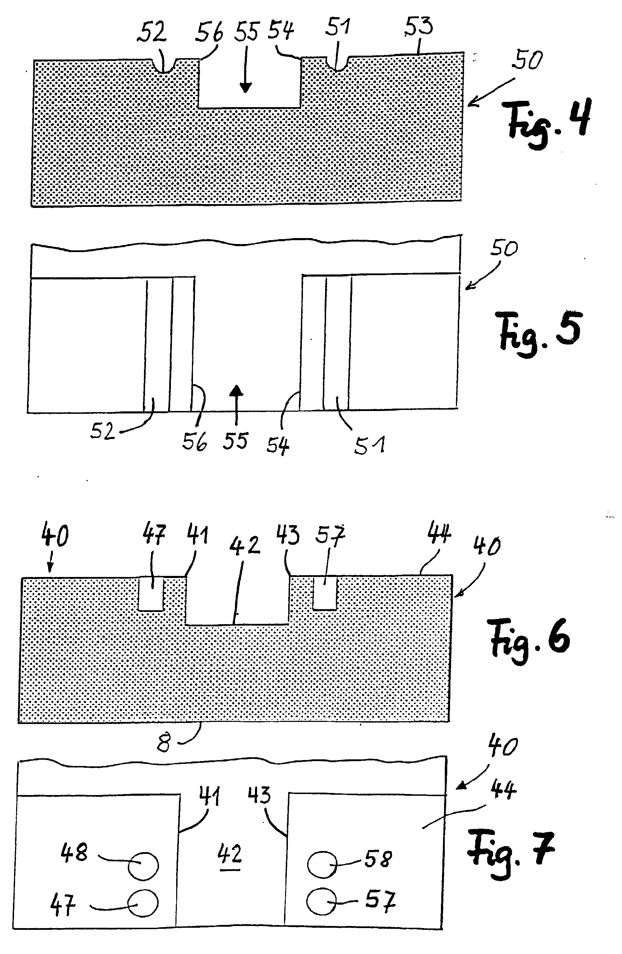

Nicht dargestellt ist ein zu dem Halter 1 passendes, an einer Werkzeugmaschine befestigtes Futter, von welchem für jede Nut je ein Prismenzapfen axial absteht. Jeder Prismenzapfen weist ein Paar gegenüberliegender Prismenflächen auf, von denen eine mit 22 für den Prismenzapfen 20 bezeichnet und in Figur 2 dargestellt ist. Die Weite jeder Nut ist so bemessen, dass zum Ausrichten des Halters 1 bezüglich des Futters in einer zur planen Oberseite parallelen x-y-Ebene jeweils ein Prismenzapfen, beispielsweise Prismenzapfen 20, in eine der vier Nuten 12, 13, 14, oder 15 eintaucht, bis seine Prismenfläche 22 an einer der genannten Kanten anliegt. Figur 2 zeigt, daß der Prismenzapfen 20 in die Nut 12 eintaucht und die Prismenfläche 22 dabei ist, sich an deren Kante 18 anzulegen. Nicht dargestellt ist, daß die der Prismenfläche 22 am Prismenzapfen 20 gegenüberliegende Prismenfläche sich im wesentlichen gleichzeitig an die Kante 16 der Nut 12 anlegt. Wenn der Prismenzapfen 20 zum Ausrichten des Halters in die Nut 12 eindringt, tauchen die übrigen drei Prismenzapfen in die weiteren Nuten 13, 14, und 15 in einer Weise ein, wie sie anhand des Prismenzapfens 20 erläutert ist. Es ist klar, dass jede Nut eine für das Ausrichten und Spannen ausreichende Tiefe hat, die ein Aufstoßen des Prismenzapfens auf den Nutgrund ausschließt.

Erfindungsgemäß besteht der Halter 1 wenigstens im Bereich der Kanten 16, 18, 11, 17, 6, 7, 8, 9 der Nuten 12, 13, 14 und 15 aus einem gesinterten Werkstoff, der kugelige, oberflächlich halb-verschmolzene Sintermaterialkörner aufweist, von denen einige mit 32, 33, 34, 35 und 36 bezeichnet sind. Zwischen den Körnern sind geschlossene Poren eingefangen, wie das aus Fig. 2 zu erkennen ist. Ist der Halter 1 zur Vorbereitung des Anspannens auf das Futter ausgerichtet, liegen die Prismenflächen der Prismenzapfen wie erwähnt an den Kanten zunächst drucklos an. Werden jetzt Halter und Futter mittels einer Spanneinrichtung (von der in der Schrift EP 255 042 ein Kugelgesperre als Beispiel beschrieben ist) zusammengespart, pressen die Prismenzapfen den gesinterten Werkstoff an den Kanten unter deren elastischer Deformation zusammen, wie das in Figur 3 am Beispiel des Prismenzapfens 20 und der Kante 18 dargestellt ist. Unter der Einwirkung des Druckes auf die Kanten können sich entweder die Poren und/oder die Körner des für den Halter benutzten Sintermaterials elastisch deformieren, wobei sich die Kanten wie etwa die Kante 18 sich geringfügig nach innen und unten bewegen. Nach Freigabe des Halters 1 von dem Futter durch die Spanneinrichtung nimmt der Halter im Bereich seiner Kanten wieder die Ausgangsform ein (Figuren 2).

Der Elastizitätsmodul des gesinterten Werkstoffes, aus dem der Halter 1 gefertigt werden kann, liegt zwischen etwa 80.000 MPa und 180.000 MPa und beträgt daher nur etwa 40% bis etwa 85% des Elastizitätsmoduls von rund 205.000 MPa für Werkzeugstahl. Sehr gute Ergebnisse wurden erzielt mit einem Sinterwerkstoff, dessen Elastizitätsmodul um etwa 15% unterhalb desjenigen von Werkzeugstahl liegt.

Der Halter 50 gemäß Fig. 4 und 5, der im ganzen aus gesintertem Werkstoff besteht, hat im wesentlichen die gleiche äußere Form wie der Halter 1. Ergänzend sind beiderseits jeder der vier kreuzweise angelegten Nuten des Halters 50 parallel zu den Kanten sich erstreckende Rinnen von im wesentlichen halbkreisförmigem Querschnitt in solchem Abstand in den Werkstoff des Halters 50 von dessen Oberseite 53 ausgehend eingedrückt, daß eine größere elastische Nachgiebigkeit der benachbarten Kanten erreicht wird. In den Figuren 4 und 5 sind diese Verhältnisse an dem Beispiel der Nut 55 gezeigt, längs der beiderseits je eine Rinne 51 bzw. 52 parallel zu den Kanten 54, 56 ausgebildet sind. Im dargestellten Beispiel erstrecken sich die Rinnen 51, 52 in einem Abstand von den Kanten 54, 56, der etwa ihrer Breite entspricht. Im einzelnen bestimmt sich die Weite der Rinnen und ihr Abstand zu den benachbarten Kanten nach der erwünschten Elastizität der Kanten 54, 56 während des Spannens.

Der Halter 40 gemäß den Figuren 6 und 7 besteht wieder aus einem einheitlichen gesinterten Werkstoff, seine äußere Form gleicht im wesentlichen derjenigen des Halters 1. Ergänzend sind in diesem Ausführungsbeispiel der Erfindung statt Rinnen je eine Reihe von Blindbohrungen beiderseits jeder Nut von der Oberseite 44 des Halters 40 ausgehend in den Sinterwerkstoff des Halters 40 eingebracht. Anordnung und Tiefe der Blindbohrungen sind in den Figuren 6 und 7 am Beispiel der Nut 42 dargestellt. Zwei zylindrische Blindbohrungen 47, 48 bzw. 57, 58 sind in den Halter 40 in axialer Richtung eingedrückt. Sie regulieren die elastischen Eigenschaften der benachbarten Nutkanten 41, 43. Die Blindbohrungen 47, 48, und 57, 58 sind jeweils hintereinander parallel zu den Nutkanten 41, 43 angeordnet. Die Tiefe der Blindbohrungen entspricht etwa der Tiefe der Nut 42, im dargestellten Beispiel ist sie geringfügig kleiner.

Der in Figur 8 im Schnitt dargestellte Halter 30 besitzt eine äußere Form, die derjenigen des Halters 1 gleicht. Er besteht aus zwei verschiedenen gesinterten Werkstoffen. Die Hauptmasse des Halters 30 besteht aus einer ersten Art Sintermaterialkörnern die nach dem Sintern einen relativ harten Werkstoff ergeben. Der Werkstoff ist im Bereich der Nutflanken 27, 29 der Nut 26 parallel zu der Oberseite 39 des Halters 30 über die ganze Länge jeder Nut in einer Tiefe herausgenommen, welche im dargestellten Ausführungsbeispiel ungefähr der Weite der Nut 26 entspricht. Diese Ausnehmungen sind ausgefüllt mit einem anderen Werkstoff, der aus einer zweiten Art Sintermaterialkörnern besteht, welche nach dem Sintern einen im Verhältnis zu dem vorgenannten Werkstoff weicheren Werkstoff ergeben. Diese Hinterfütterung 37, 38 erhöht die Elastizität der Kanten der Nut 26 beim Spannen und wirkt vibrationsdämpfend.

Figur 9 schließlich zeigt eine Ausführungsform eines Halters 60 im Schnitt, der in seiner äußeren Form dem Halter 1 gleicht. Er besteht aus zwei verschiedenen gesinterten Materialien. Ein an die Oberseite 62 angrenzender Bereich 64, der sich über die ganze Oberseite 62 erstreckt, besteht aus einem härteren gesinterten Werkstoff. Er weist plane Oberflächen auf, die als Z-Referenzflächen für ein nicht dargestelltes Futter einer Werkzeugmaschine, insbesondere einer Funkenerosionsmaschine dienen können. Der Bereich 64 ist entsprechend den vier Sektoren 2, 3, 4, 5 des Halters 1 ebenfalls in vier Sektoren aufgeteilt, die voneinander durch die vier kreuzweise angelegten Nuten getrennt sind Er weist ferner die Kanten 66, 68 der Nut 65 sowie die Kanten der weiteren drei Nuten auf. Der verbleibende Korpus des Halters 60 einschließlich der inneren Teile der Nuten besteht aus einem weicheren gesinterten Werkstoff, welcher einfacher zu bearbeiten ist und Dämmfunktion besitzt. An seiner Unterseite 69 kann das zu bearbeitende Werkstück oder das Werkzeug befestigt werden.

Ein weicher, gesinterter Werkstoff kann aus gesinterten Aluminium- oder Kupferkörnern bestehen, während der härtere Werkstoff aus gesinterten Stahlkörnern gefertigt sein kann. Im übrigen ist die Erfindung nicht auf Nuten mit rechteckigem Querschnitt beschränkt. Man kann den Nuten beispielsweise auch einen V-förmigen oder tropfenförmigen Querschnitt verleihen.

## Patentansprüche

1. Halter für ein Werkstück oder Werkzeug, in dessen Oberfläche (2, 3, 4, 5; 39; 39; 44; 62) mehrere Nuten (12, 13, 14, 15; 26; 42; 55; 65) mit im wesentlichen ebenen Flanken eingebracht sind, deren an der Oberfläche ausgebildete, gegenüberliegende Kanten (16, 18, 11, 17, 8, 9; 41, 43; 54, 56) einen vorgegebenen Abstand aufweisen, **dadurch gekennzeichnet, daß** der Halter wenigstens im Bereich der elastisch deformierbaren Kanten aus einem gesinterten Werkstoff besteht.

2. Halter nach Anspruch 1, **dadurch gekennzeichnet, daß** der gesinterte Werkstoff geschlossene, unter Druck deformierbare Poren aufweist.

3. Halter nach einem der vorstehenden Ansprüche, **dadurch gekennzeichnet, daß** die Körner (32, 33, 34, 35, 36) des gesinterten Werkstoffes unter Druck elastisch deformierbar sind.

4. Halter nach einem der vorstehenden Ansprüche, **dadurch gekennzeichnet, daß** der gesinterte Werkstoff mehrere verschiedene Arten an Sintermaterialkörnern aufweist.

5. Halter nach einem der vorstehenden Ansprüche, **dadurch gekennzeichnet, dass** der gesinterte Werkstoff mehrere Schichten aus jeweils unterschiedlichen Kornarten aufweist.

6. Halter nach einem der vorstehenden Ansprüche, **dadurch gekennzeichnet, dass** die Nuten durch plastisches Prägen aus dem Werkstoff des Halters erzeugt worden sind.

7. Halter nach einem der vorstehenden Ansprüche, **dadurch gekennzeichnet, dass** der gesinterte Werkstoff eine nicht isotrope Elastizität besitzt.

8. Halter nach einem der vorstehenden Ansprüche, **dadurch gekennzeichnet, dass** der gesinterte Werkstoff teilweise nichtmetallische Körner aufweist, die gegebenenfalls in Lagen angeordnet sind.

9. Halter nach einem der vorstehenden Ansprüche, **dadurch gekennzeichnet, dass** der gesinterte Werkstoff schwingungsdämpfende Eigenschaften hat.

10. Halter nach einem der vorstehenden Ansprüche, **dadurch gekennzeichnet, dass** unterhalb der äußeren Nutenkanten Bereiche (37, 38; 47, 48, 57, 58) aus dem gesinterten Werkstoff vorgesehen sind.

11. Halter nach Anspruch 10, **dadurch gekennzeichnet, dass** die Bereiche von den Nutflanken (27, 29) ausgehend sich im wesentlichen parallel zur Oberfläche in den Halter (30) erstrecken.

12. Halter nach Anspruch 10, **dadurch gekennzeichnet, dass** in das gesinterte Material Blindbohrungen (47, 48, 57, 58) sich neben der Nut (42) senkrecht zur Oberfläche (44) in den Halter (40) eingebracht sind.

13. Halter nach Anspruch 12, **dadurch gekennzeichnet, dass** beiderseits neben jeder Nut mehrere Blindbohrungen vorgesehen sind.

14. Halter nach einem der vorstehenden Ansprüche, **dadurch gekennzeichnet, dass** beiderseits jeder Nut sich je eine zur Nut parallele Rinne (51, 52) erstreckt.

15. Halter nach einem der vorstehenden Ansprüche, **dadurch gekennzeichnet, dass** er insgesamt aus gesintertem Werkstoff besteht.
